# FASCICULE DE BREVET EUROPEEN

(11) **EP 4 034 441 B1**
(45) Date de publication et mention de la délivrance du brevet: **30.10.2024**
(21) Numéro de dépôt: 20775700.6
(22) Date de dépôt: 01.09.2020
(51) Int. Cl.: B60W 40/04, B60W 30/18, G08G 1/01

(54) **PROCÉDÉ DE DÉTERMINATION DE L'ÉTAT DE LA CIRCULATION DANS UNE ZONE DANS LAQUELLE SE TROUVENT DES VÉHICULES AUTOMOBILES**
VERFAHREN ZUR BESTIMMUNG DES VERKEHRSZUSTANDS IN EINEM BEREICH, IN DEM SICH KRAFTFAHRZEUGE BEFINDEN
METHOD FOR DETERMINING THE STATE OF TRAFFIC IN AN AREA IN WHICH MOTOR VEHICLES ARE LOCATED

(30) Priorité: 25.09.2019 FR 1910563
(43) Date de publication de la demande: 03.08.2022
(73) Titulaire: Stellantis Auto SAS, 78300 Poissy (FR)
(72) Inventeur: GALERON, Patrice, 94240 L HAY LES ROSES (FR); MILLI, David, 75008 Paris (FR)
(86) Numéro de dépôt international: PCT/FR2020/051518
(87) Numéro de publication internationale: WO 2021/058886

(56) Documents cités:
- EP-A1- 3 319 063
- DE-A1- 102016 206 728
- VALADKHANI AMIR HOSEIN ET AL: "Integration of loop and probe data for traffic state estimation on freeway and signalized arterial links", 2017 IEEE 20TH INTERNATIONAL CONFERENCE ON INTELLIGENT TRANSPORTATION SYSTEMS (ITSC), IEEE, 16 October 2017 (2017-10-16), pages 1 - 6, XP033330479, DOI: 10.1109/ITSC.2017.8317822

## Description

L'invention se rapporte au domaine des systèmes d'aide à la conduite équipant les véhicules automobiles. Les systèmes d'aide à la conduite, souvent dénommés sous l'acronyme anglais ADAS (pour « *Advanced driver-assistance systems* »), ont pour but d'alléger la charge du conducteur, notamment en le libérant de certaines tâches, en améliorant son attention et/ou sa perception de l'environnement, en détectant certains risques, en effectuant automatiquement des actions en réponse à la détection de ces risques, etc.

Pour remplir les fonctions souhaitées, les systèmes d'aide à la conduite fonctionnent à l'aide de capteurs équipant le véhicule et permettant de percevoir l'environnement du véhicule, et notamment les véhicules situés à proximité. Cette perception de l'environnement par le système d'aide à la conduite permet de prévenir les risques d'accidents en garantissant le respect de règles prédéfinies, comme par exemple celle d'imposer que le véhicule se maintienne à une distance minimale du véhicule qui le précède.

Les informations remontées par les différents capteurs embarqués, ainsi que les informations provenant des différents systèmes embarqués (système de navigation, etc.) et provenant de différents systèmes distants (objets connectés, serveurs distants, etc.) permettent à un véhicule de détecter de façon autonome un certain nombre de dangers auxquels un véhicule peut être confronté et auxquels le conducteur devra réagir.

Avec la mise sur le marché de véhicules connectés, c'est-à-dire capable d'échanger des informations, via des réseaux de communication sans fil, avec des entités distantes, telles que des serveurs informatiques ou des objets connectés, ou directement de véhicule à véhicule, il est intéressant d'utiliser les informations disponibles afin de connaître en temps réel l'état de la circulation. L'invention part de la constatation que des informations provenant de divers véhicules peuvent être utilisées pour déterminer l'état de la circulation, et, notamment, l'existence d'un embouteillage dans une zone donnée.

Le document "intégration of loop and probe data for traffic state estimation on freeway and signalized arterial links", valadkhani amir hosein et al, divulgue une méthode de fusion de données employant des types de données fixes et flottants (ou sondes), pour estimer les états du trafic sur des autoroutes et des liaisons signalées.

L'invention a pour but d'améliorer la détection de l'état de la circulation dans une zone où se trouvent des véhicules connectés, et plus particulièrement la détection de ralentissements ou d'embouteillages.

À cet effet, l'invention concerne un procédé de détermination de l'état de la circulation dans une zone dans laquelle se trouvent des véhicules automobiles, ci-après véhicules cibles, et à proximité de laquelle se trouve un véhicule automobile, ci-après véhicule hôte, le procédé comportant les étapes de :
- récupérer des informations relatives à l'utilisation, par les véhicules cibles, d'une fonction d'arrêt et redémarrage automatique du moteur ;
- déterminer l'état de la circulation dans ladite zone, sur la base des informations relatives à l'utilisation de la fonction d'arrêt et redémarrage automatique par les véhicules cibles.

Ainsi, le procédé conforme à l'invention, en exploitant des informations relatives à l'utilisation, par des véhicules présents dans une zone donnée, de la fonction d'arrêt et redémarrage automatique du moteur, permet de déterminer l'état de la circulation dans cette zone, et en particulier si les véhicules qui s'y trouvent sont pris dans un embouteillage.

Dans une réalisation, la récupération des informations relatives à l'utilisation de la fonction d'arrêt et redémarrage automatique comprend la transmission de ces données par chacun des véhicules cibles situés dans la zone vers un serveur distant.

Dans une réalisation, la détermination de l'état de la circulation est effectuée par un calculateur du serveur distant.

Dans une réalisation, des informations relatives à l'état de la circulation dans la zone sont transmises du serveur distant au véhicule hôte.

Dans une réalisation, la récupération des informations relatives à l'utilisation de la fonction d'arrêt et redémarrage automatique comprend la transmission de ces données par chacun des véhicules cibles situés dans la zone vers le véhicule hôte.

Dans une réalisation, la détermination de l'état de la circulation est effectuée par un calculateur embarqué du véhicule hôte.

Dans une réalisation, l'étape de déterminer l'état de la circulation comprend est mise en oeuvre de façon à déterminer si les véhicules cibles présents dans la zone sont dans un embouteillage.

Dans une réalisation, les informations relatives à l'utilisation de la fonction d'arrêt et redémarrage automatique incluent la fréquence d'utilisation de cette fonction par le ou les véhicules cibles concernés.

L'invention concerne également un produit programme d'ordinateur comprenant des instructions qui, lorsque le programme est exécuté par un ou plusieurs processeur(s), conduisent celui-ci (ceux-ci) à mettre en oeuvre les étapes du procédé tel que défini ci-dessus.

L'invention concerne également un véhicule automobile mettant en oeuvre le procédé tel que défini ci-dessus.

La présente invention sera mieux comprise à la lecture de la description détaillée qui suit, faite en référence aux dessins annexés, dans lesquels :
[Fig. 1] La figure 1 représente un véhicule automobile équipé d'un système de notification permettant la mise en oeuvre d'un procédé conforme à l'invention.
[Fig. 2] La figure 2 représente les étapes de mise en oeuvre d'un procédé conforme à l'invention.
[Fig.3] La figure 3 représente les étapes de mise en oeuvre d'un deuxième exemple de réalisation d'un procédé conforme à l'invention.

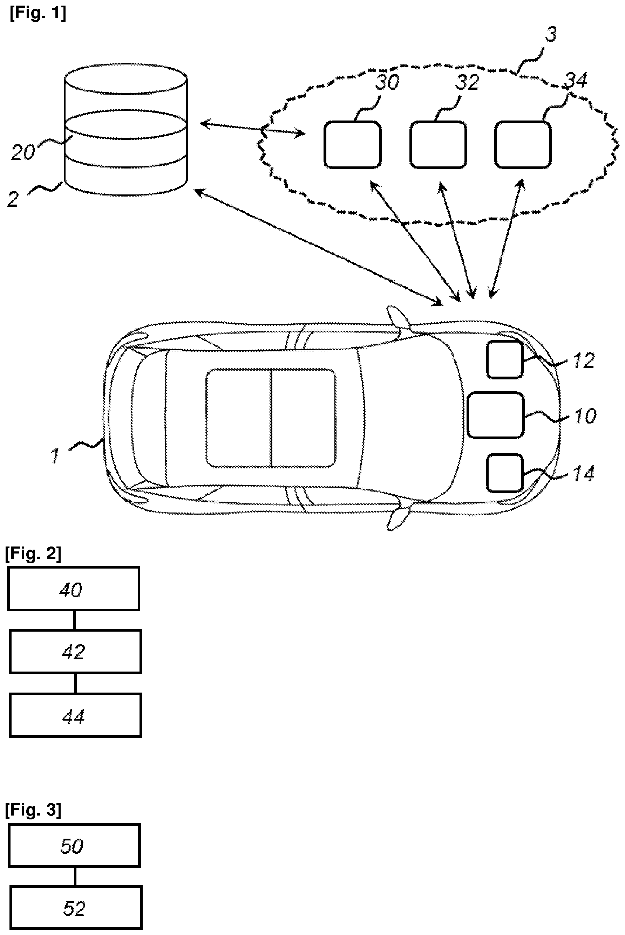

La figure 1 représente un véhicule automobile configuré pour mettre en oeuvre le procédé conforme à l'invention. Le véhicule 1, ci-après véhicule hôte 1, de la figure 1 comporte un calculateur embarqué 10, qui est relié à un module de communication sans fil 12, qui permet au véhicule de communiquer avec des entités distantes par l'intermédiaire d'un ou plusieurs réseaux de communication sans fil. Le module de communication sans fil 12 est notamment apte à échanger des données avec au moins un serveur distant 2. Le module de communication sans fil 12 est également apte à échanger des données directement avec d'autres véhicules connectés, comme par exemple les véhicules 30, 32, 34 de la figure 1. Le véhicule hôte 1 comporte par ailleurs un module de géolocalisation 14, permettant de géolocaliser le véhicule hôte 1 au moyen d'un ou plusieurs des systèmes de localisation par satellites disponibles (GPS, Galileo, Glonass, etc.).

On décrit ci-après, en relation avec la figure 2, les étapes de mise en oeuvre d'un procédé conforme à l'invention, qui permet au véhicule hôte 1 de déterminer, lorsqu'il arrive à proximité d'une zone 3 dans laquelle se trouvent plusieurs véhicules 30, 32, 34, l'état de la circulation dans cette zone 3, et notamment de déterminer si ces véhicules se trouvent pris dans un embouteillage.

Une première étape 40 du procédé consiste à récupérer des informations relatives à l'utilisation de la fonction « Stop and Start »[, ou fonction d'arrêt et redémarrage automatique du moteur, par les véhicules 30, 32, 34 présents dans la zone 3. Une telle fonction est assurée par un système embarqué permettant la coupure et le redémarrage automatique du moteur en cas d'arrêt du véhicule, notamment dans les embouteillages et aux feux rouges. Un tel système permet de limiter très fortement la durée des situations dans lesquelles le moteur tourne alors que le véhicule est à l'arrêt, diminuant ainsi la consommation du véhicule et les émissions de polluants.

Dans le cadre du procédé objet de l'invention, les informations relatives à l'utilisation de la fonction « Stop and Start » sont utilisées pour déterminer l'état actif ou non des véhicules 30, 32, 34 se trouvant dans la zone 3, ce qui permet de déterminer l'état de la circulation.

La première étape 40 consiste donc, pour chaque véhicule 30, 32, 34 situé dans la zone 3, à communiquer des informations relatives à l'utilisation de la fonction d'arrête et redémarrage automatique à un serveur distant 2.

Une deuxième étape 42 consiste à déterminer, sur la base de l'ensemble des informations collectées par le serveur distant 2, la probabilité que les véhicules 30, 32, 34, de la zone 3 se trouvent dans une embouteillage. Ainsi, si la fonction d'arrêt et redémarrage automatique des véhicules présents dans cette zone n'est pas utilisée, alors il sera déterminé que ces véhicules ne sont pas dans un embouteillage. Si, au contraire, la fonction d'arrêt et redémarrage automatique est mise en oeuvre par au moins une partie ou par l'ensemble des véhicules présents dans cette zone, alors il est probable que ceux-ci se trouvent dans un embouteillage. Pour une détermination plus précise de l'état de la circulation, la fréquence de mise en oeuvre de la fonction d'arrêt et redémarrage automatique sera prise en compte. En effet, plus la fréquence d'utilisation de cette fonction sera élevée, plus grande sera la probabilité que les véhicules présents dans la zone 3 soient dans un embouteillage. Dans l'exemple de la figure 2, cette étape est réalisée par un calculateur 20 du serveur distant 2.

Une troisième étape 44 consiste à transmettre, depuis le serveur distant 2 vers le véhicule hôte 1, des informations relatives à l'état de la circulation tel que déterminé par le calculateur 20 du serveur distant 2 sur la base des informations fournies par les véhicules 30, 32, 34 présents dans la zone 3. Ces informations peuvent être ensuite exploitées par le véhicule hôte 1 pour, le cas échéant, avertir le conducteur de l'état de la circulation dans une zone de laquelle il approche, et notamment pour lui proposer des actions telles qu'un changement d'itinéraire.

On décrit ci-après, en relation avec la figure 3, les étapes de mise en oeuvre d'un procédé conforme à l'invention, dans un deuxième exemple de réalisation.

Dans ce deuxième exemple de réalisation, la première étape 50 du procédé consiste également à récupérer des informations relatives à l'utilisation de la fonction « Stop and Start » ou fonction d'arrêt et redémarrage automatique du moteur. Dans l'exemple de la figure 3, les informations relatives à l'utilisation de la fonction « Stop and Start » sont communiquées par chacun des véhicules 30, 32, 34 présents dans la zone 3 directement au véhicule hôte 1, sans passer par le serveur distant 2.

Une deuxième étape 52 consiste à déterminer, sur la base de l'ensemble des informations collectées par le véhicule hôte 1, la probabilité que les véhicules 30, 32, 34, de la zone 3 se trouvent dans une embouteillage. Ainsi, de même que pour le procédé décrit en relation avec la figure 2, si la fonction d'arrêt et redémarrage automatique des véhicules présents dans cette zone n'est pas utilisée, alors il sera déterminé que ces véhicules ne sont pas dans un embouteillage. Si, au contraire, la fonction d'arrêt et redémarrage automatique est mise en oeuvre par une partie ou par l'ensemble des véhicules présents dans cette zone, alors il est probable que ceux-ci se trouvent dans un embouteillage. De même que pour l'exemple de la figure 2, la fréquence de mise en oeuvre de la fonction d'arrêt et redémarrage automatique sera prise en compte pour la détermination de l'état de la circulation. En effet, plus la fréquence d'utilisation de cette fonction sera élevée, plus grande sera la probabilité que les véhicules présents dans la zone 3 soient dans un embouteillage. Ces informations peuvent être ensuite exploitées par le véhicule hôte 1 pour, le cas échéant, avertir le conducteur de l'état de la circulation dans une zone de laquelle il approche, et notamment pour lui proposer des actions telles qu'un changement d'itinéraire.

## Revendications

1. Procédé de détermination de l'état de la circulation dans une zone (3) dans laquelle se trouvent des véhicules automobiles, ci-après véhicules cibles (30, 32, 34), et à proximité de laquelle se trouve un véhicule (1) automobile, ci-après véhicule hôte (1) le procédé comportant les étapes consistant à :
- récupérer (40) des informations relatives à l'utilisation, par les véhicules cibles (30, 32, 34), d'une fonction d'arrêt et redémarrage automatique du moteur ;
- déterminer (42) l'état de la circulation dans la zone (3), sur la base des informations relatives à l'utilisation de la fonction d'arrêt et redémarrage automatique par les véhicules cibles (30, 32, 34).

2. Procédé selon la revendication précédente, dans lequel la récupération des informations relatives à l'utilisation de la fonction d'arrêt et redémarrage automatique comprend la transmission de ces données par chacun des véhicules cibles (30, 32, 34) situés dans la zone (3) vers un serveur distant (2).

3. Procédé selon la revendication précédente, dans lequel la détermination de l'état de la circulation est effectuée par un calculateur (20) du serveur distant (2).

4. Procédé selon la revendication précédente, dans lequel des informations relatives à l'état de la circulation dans la zone (3) sont transmises (44) du serveur distant (2) au véhicule hôte (1).

5. Procédé selon la revendication 1, dans lequel la récupération des informations relatives à l'utilisation de la fonction d'arrêt et redémarrage automatique comprend la transmission de ces données par chacun des véhicules cibles (30, 32, 34) situés dans la zone (3) vers le véhicule hôte (1).

6. Procédé selon la revendication précédente, dans lequel la détermination de l'état de la circulation est effectuée par un calculateur embarqué (10) du véhicule hôte (1).

7. Procédé selon l'une des revendications précédentes, dans lequel l'étape de déterminer (42) l'état de la circulation est mise en oeuvre de façon à déterminer si les véhicules cibles (30, 32, 34) présents dans la zone (3) sont dans un embouteillage.

8. Procédé selon l'une des revendications précédentes, dans lequel les informations relatives à l'utilisation de la fonction d'arrêt et redémarrage automatique incluent la fréquence d'utilisation de cette fonction par le ou les véhicules cibles (30, 32, 34) concernés.

9. Produit programme d'ordinateur comprenant des instructions qui, lorsque le programme est exécuté par un ou plusieurs processeur(s), conduisent celui-ci (ceux-ci) à mettre en oeuvre les étapes du procédé selon l'une des revendications 1 à 8.

10. Véhicule automobile (1) mettant en oeuvre le procédé conforme à l'une des revendications 1 et 5 à 8.

## Patentansprüche

1. Verfahren zur Bestimmung der Verkehrsbedingungen in einer Zone (3), in der sich Kraftfahrzeuge, im Folgenden als Zielfahrzeuge (30, 32, 34) bezeichnet, befinden und in deren Nähe sich ein Kraftfahrzeug (1) befindet, im Folgenden als Begleitfahrzeug (1) bezeichnet, wobei das Verfahren die folgenden Schritte umfasst:
- Abrufen (40) von Informationen über die Verwendung einer automatischen Funktion zum Stoppen/Starten des Motors durch Zielfahrzeuge (30, 32, 34);
- Bestimmung (42) der Verkehrsbedingungen in der Zone (3) auf der Grundlage von Informationen über die Nutzung der automatischen Stopp-/Startfunktion durch Zielfahrzeuge (30, 32, 34).

2. Verfahren nach dem vorhergehenden Anspruch, wobei das Abrufen von Informationen in Bezug auf die Verwendung der automatischen Stopp- und Wiederanlauffunktion das Übertragen der Daten von jedem der Zielfahrzeuge (30, 32, 34), die sich in der Zone (3) befinden, an einen entfernten Server (2) umfasst.

3. Verfahren nach dem vorhergehenden Ansprüche, wobei die Bestimmung des Verkehrszustands durch einen Rechner (20) des entfernten Servers (2) durchgeführt wird.

4. Verfahren nach dem vorhergehenden Ansprüche, wobei Informationen über den Verkehrsstatus in der Zone (3) von dem Remote-Server (2) an das Host-Fahrzeug (1) übertragen werden (44).

5. Verfahren nach Anspruch 1, wobei das Abrufen von Informationen in Bezug auf die Verwendung der automatischen Stopp-/Startfunktion das Übertragen solcher Daten von jedem der Zielfahrzeuge (30, 32, 34), die sich in der Zone (3) befinden, an das Host-Fahrzeug (1) umfasst.

6. Verfahren nach dem vorhergehenden Anspruch, wobei die Bestimmung des Verkehrszustands durch einen Bordrechner (10) des Host-Fahrzeugs (1) durchgeführt wird.

7. Verfahren nach einem der vorhergehenden Ansprüche, wobei der Schritt des Bestimmens (42) der Verkehrsbedingungen derart durchgeführt wird, dass bestimmt wird, ob sich die in der Zone (3) anwesenden Zielfahrzeuge (30, 32, 34) in einem Stau befinden.

8. Verfahren nach einem der vorhergehenden Ansprüche, wobei die Information über die Verwendung der automatischen Stopp-/Startfunktion die Häufigkeit der Benutzung dieser Funktion durch das/die betroffene(n) Zielfahrzeug(e) (30, 32, 34) umfasst.

9. Computerprogrammprodukt mit Anweisungen, die beim Ausführen des Programms durch einen oder mehrere Prozessoren den Prozessor veranlassen, die Verfahrensschritte nach einem der Ansprüche 1 bis 8 auszuführen.

10. Kraftfahrzeug (1), das das Verfahren nach einem der Ansprüche 1 und 5 bis 8 ausführt.

## Claims

1. A method for determining the traffic conditions in a zone (3) in which motor vehicles, hereinafter referred to as target vehicles (30, 32, 34), are located and in the vicinity of which a motor vehicle (1) is located, hereinafter referred to as host vehicle (1) the method comprising the steps of:
- retrieve (40) information on the use of an automatic engine stop/start function by target vehicles (30, 32, 34);
- determine (42) the traffic conditions in zone (3), based on information on the use of the automatic stop/start function by target vehicles (30, 32, 34).

2. The method of the preceding claim, wherein retrieving information relating to the use of the automatic stop and restart function comprises transmitting said data from each of the target vehicles (30, 32, 34) located in zone (3) to a remote server (2).

3. A method according to the preceding claim, wherein the determination of the traffic condition is carried out by a computer (20) of the remote server (2).

4. The method of the preceding claim, wherein information about the traffic status in zone (3) is transmitted (44) from the remote server (2) to the host vehicle (1).

5. The method of claim 1, wherein the retrieval of information relating to the use of the automatic stop/start function comprises transmitting such data from each of the target vehicles (30, 32, 34) located in zone (3) to the host vehicle (1).

6. A method according to the preceding claim, wherein the determination of the traffic condition is carried out by an on-board computer (10) of the host vehicle (1).

7. A method according to one of the preceding claims, wherein the step of determining (42) traffic conditions is implemented in such a way as to determine whether the target vehicles (30, 32, 34) present in the zone (3) are in a traffic jam.

8. A method according to one of the preceding claims, wherein the information relating to the use of the automatic stop/start function includes the frequency of use of said function by the target vehicle(s) (30, 32, 34) concerned.

9. A computer program product comprising instructions which, when the program is executed by one or more processors, cause the processor to carry out the process steps according to any of claims 1 to 8.

10. A motor vehicle (1) carrying out the method according to one of claims 1 and 5 to 8.
